# EUROPÄISCHE PATENTSCHRIFT

(11) **EP 3 254 944 B1**
(45) Veröffentlichungstag und Bekanntmachung des Hinweises auf die Patenterteilung: **24.10.2018**
(21) Anmeldenummer: 17171275.5
(22) Anmeldetag: 16.05.2017
(51) Int. Cl.: B62M 6/60, B62M 6/65, B62M 6/75, B62M 6/90, B60L 11/18, B62K 3/00, B62K 21/12, B62K 15/00, B62M 6/40, B62K 11/00

(54) **ELEKTROMOTORISIERTER TRETROLLER**
ELECTRIC-MOTORIZED KICK-SCOOTER
TROTTINETTE ÉLECTRIQUE

(30) Priorität: 08.06.2016 DE 102016210107
(43) Veröffentlichungstag der Anmeldung: 13.12.2017
(73) Patentinhaber: Magna Exteriors GmbH, 63877 Sailauf (DE)
(72) Erfinder: ADAM, Christine, 39108 Magdeburg (DE)
(74) Vertreter: Rausch, Gabriele

(56) Entgegenhaltungen:
- EP-A1- 2 711 279
- CN-A- 104 691 690
- CN-A- 105 620 622
- CN-U- 204 821 876
- DE-A1-102013 207 517

## Beschreibung

Die Erfindung betrifft einen kurz auch als elektromotorisierten Tretroller bezeichneten Tretroller mit elektromotorischem Antrieb gemäß dem Oberbegriff des Anspruchs 1.

Ein begrenztes Angebot an bezahl- und/oder verfügbaren Parkplätzen, welche meist zeitbeschränkt, teuer oder weit entfernt vom Zielort sind, Umweltzonen, Platzmangel in den Stadtzentren und überfüllten Tangenten einhergehend mit steigenden Energiekosten erschweren es agil zu sein.

Diese Einengung der individuellen Mobilität soll mit Elektro-Zweiradfahrzeugen überwunden werden, welche sich entweder als selbständiges Fahrzeugkonzept nutzen oder für Last-Mile-Mobility im Personenkraftwagen verstauen lassen.

Klapp- und/oder Faltfahrräder ebenso wie -roller sind als Camping- und/oder Bootszubehör seit geraumer Zeit bekannt.

Im Rahmen eines erweiterten Mobilitätskonzepts wird deren elektrische Motorisierung vorangetrieben.

Durch «*http:*//*www.dailymail.co.uk*/*video*/*sciencetech*/*video-1137633*/*The-worlds-folding-bike-Impossible-fits-bag.html»* ist ein rein elektrisch angetriebenes E-Bike ohne Pedalantrieb bekannt, welches sich in einer Vielzahl von Klapp- und Falt-Schritten von einer handtaschen- bis rucksackgroßen Packgröße bis zu seiner endgültigen Einsatzgröße aufbauen und wieder zusammenlegen lässt.

Durch DE 10 2010 027 997 A1 und durch *«http:*//*www.elektrofahrrad24.de*/*news_vw-e-bike-bilder-zur-studie-12103#.VOFB-Onn36k»* ist ebenfalls ein rein elektrisch angetriebenes E-Bike ohne Pedalantrieb bekannt, welches mit weniger Klapp- und Falt-Schritten zwischen Pack- und Einsatzgröße auskommt, dessen Packgröße dafür aber die Reserveradmulde eines Mittelklassewagens einnimmt.

Dokument CN 105 620 622 wird als nächstliegender Stand der Technik erkannt und zeigt die Merkmale des Oberbegriffs des Anspruchs 1.

Nachteilig an den beiden zuvor genannten Fortbewegungsmitteln ist deren:
- begrenzte Reichweite, an deren Ende sie mangels Pedalantriebs ein Fortkommen behindern, statt zu unterstützen,
- mit einer erträglichen Packgröße einhergehende, zeitaufwändige Vielzahl von Aufbau- und Zusammenklappschritten,
- mit einer erträglichen Anzahl von Aufbau- und Zusammenklappschritten einhergehende unbefriedigend raumgreifende Packgröße, sowie
- mangelnde Möglichkeit eines muskelkraftbetriebenen Antriebs, gleich ob mit oder ohne elektromotorische Unterstützung.

Mit dem Aufkommen von Kickboards, welche mit einem Trittbrett, einer auf dieses herunterklappbaren Haltestange und zwei Vorderrädern und einem oder mehreren Hinterrädern ausgestattet sind und bei welchen im Gegensatz zu Fahrrädern und Tretrollern ein Lenkeinschlag nicht durch eine Schwenkbewegung eines mit einem lenkbaren Rad unverdrehbar verbundenen Lenkers um eine auf einer Fahrbahnoberfläche aufstehende Lenkachse, sondern wie bei Skateboards durch Seitenneigung des Trittbretts um eine parallel zur Fahrbahnoberfläche verlaufende Kippachse erhalten wird, erfreuen sich kleine und besonders leichte, ohne Werkzeug auf ein Mindestmaß zusammenfaltbare Mini-Tretroller, deren Lenker sich ähnlich wie die Haltestange eines Kickboards auf das Trittbrett herunterklappen lässt, vor allem im städtischen Bereich großer Beliebtheit. Neben einem kleinen Raddurchmeser von höchstens etwa 15cm beziehungsweise 6" zeichnen sich diese durch einen einfachen und leichten Aufbau unter Verzicht auf einen Sattel oder eine sonstige Sitzgelegenheit sowie die Möglichkeit einer Verringerung deren Packmaßes durch ein Herunterklappen eines mit dem um die auf dem Trittbrett schräg oder senkrecht aufstehende Lenkachse schwenkbaren Vorderrad unverdrehbar verbundenen Lenkers aus.

Durch DE 10 2012 204 915 A1 ist ein elektromotorisierter Mini-Tretroller bekannt, welcher im Gegensatz zu den zuvor erwähnten rein elektrisch und ohne Muskelkraft angetriebenen E-Bikes wie von einem Mini-Tretroller gewohnt rein durch Muskelkraft angetrieben werden kann. Darüber hinaus kann der elektromotorisierte Mini-Tretroller zusätzlich zu einem möglichen rein elektrischen Antrieb durch Muskelkraft unterstützt fortbewegt werden. Eine Bremsfunktion mit Rekuperation erweitert dessen Reichweite, an deren Ende der Mini-Tretroller weiterhin ein Fortkommen durch die Möglichkeit eines uneingeschränkten rein muskelkraftbetriebenen Antriebs unterstützt. Der über ein Kardangelenk mit dem um eine schräg nach vorn geneigte Lenkerachse hin und her schwenkbaren Vorderrad verbundene Lenker ist vor dem Vorderrad angeordnet. Dadurch baut der Lenker in mehrfach gefaltetem, zusammengeklapptem Zustand über dem Vorderrad auf, wodurch eine unerfreulich wenig kompakte Packgröße erhalten wird.

Der Vollständigkeit halber sei noch ein durch ES 2 508 991 A1 bekanntes Kickboard erwähnt, bei dem ein in seinem Aufbau dem eines Skateboard entsprechendes Trittbrett direkt und nahtlos in ein an seiner Vorderseite aufstehendes Frontschild übergeht, welches durch eine in diesem angebrachte Grifföffnung die Funktion der Haltestange mit übernimmt.

DE102013207517 A1 betrifft eine Steuerradaufhängung bei welcher die mit einem Lenkstützarm verbundene Radachse das Steuerrad drehbar lagert, die in ein schmalspuriges Fahrzeug verbaut wird.

US20150321722 beschreibt einen faltbaren Motorroller der mit einer Batterie versehen ist. Der Motorroller wird so gefaltet dass die beiden Räder parallel zueinander liegen.

US8801010B2 zeigt einen Roller der zwischen einer Gebrauchsposition und einer Position in der verstaut werden kann, einen beweglichen Aufbau für den dritt aufweist.

EP2514661 A2 zeigt einen 3-rädrigen Roller mit 2 Vorderrädern. Beim zusammenklappen des Rotors wird das Hinterrad flach zwischen den Vorderrädern verschwenkt.

DE29612276 U1 betrifft einen Tretroller mit einem Klappgelenk, das mit einem Schwenkhebel arretiert wird.

Aus der DE102012220011A1 ist eine Betriebseinrichtung für das Betreiben eines Elektrorads bekannt, die die Geschwindigkeit des Gefährts in Abhängigkeit von Umweltparametern steuert.

Eine Aufgabe der Erfindung ist es, einen elektromotorisierten Tretroller zu schaffen, der mit wenigen einfachen Schritten in eine praktikable Packgröße beziehungsweise von einer praktikablen Packgröße in dessen Einsatzgröße überführbar ist.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Die Erfindung betrifft demnach einen elektromotorisierten Tretroller, beispielsweise einen elektromotorisierten Mini-Tretroller mit einem Raddurchmeser von höchstens etwa 15cm beziehungsweise 6", oder einen elektromotorisierten Full-Size-Tretroller mit einem Raddurchmesser von beispielsweise 30cm beziehungsweise 12", mit Trittbrett, einem an dem Trittbrett angeordneten Hinterrad, beispielsweise mit Einfach- oder Doppelbereifung, einem Lenker und einem unverdrehbar mit dem Lenker verbundenen, gemeinsam mit diesem um eine schräg stehende Lenkerachse hin und her schwenkbaren Vorderrad.

Die Lenkerachse ist ausgehend vom Vorderrad schräg nach hinten geneigt.

Das Trittbrett weist eine Aufstandspartie auf, welche bei einer Verwendung des Tretrollers als Fortbewegungsmittel im Wesentlichen parallel zur Fahrbahn liegt. Nach vorn zum lenkbaren Vorderrad hin schließt sich eine gegenüber der Aufstandspartie aufgekimmte Vorderpartie an. Die dem eingeschlossenen Winkel zwischen der Aufstandspartie und der Vorderpartie entsprechende Aufkimmung beträgt bevorzugt zwischen 30° und 60°, besonders bevorzugt 45°. Die Lenkerachse, um welche das Vorderrad gemeinsam mit dem mit diesem unverdrehbar verbundenen Lenker hin und her schwenkbar am Trittbrett angeordnet ist, steht senkrecht auf der gegenüber der Aufstandspartie geneigten Vorderpartie auf.

Wichtig ist in diesem Zusammenhang hervorzuheben, dass im vorliegenden Dokument der Begriff Achse im Gegensatz zu dem Begriff Welle oder Zapfen eine geometrische Achse und nicht ein Maschinenelement bezeichnet.

Das Hinterrad ist am der Vorderpartie abgewandten Ende der Aufstandspartie angeordnet.

Der Lenker weist eine Frontpartie und eine sich an diese anschließende Verbindungspartie auf. In Einsatzgröße des Tretrollers beispielsweise während der Verwendung des Tretrollers als Fortbewegungsmittel ist die Frontpartie des Lenkers vor dem Vorderrad angeordnet.

Die Verbindungspartie schließt gegenüber der Aufstandspartie einen Knickwinkel ein. Der Knickwinkel entspricht der Aufkimmung, wobei zumindest bei nicht eingeschlagenem Vorderrad die Frontpartie des Lenkers und die Aufstandspartie des Trittbretts bevorzugt einen rechten Winkel einschließen. Der eingeschlossene Winkel zwischen der Frontpartie des Lenkers und der Aufstandspartie des Trittbretts kann jedoch auch von einem rechten Winkel abweichen, beispielsweise kleiner sein, um mehr Fußraum zu erhalten, oder größer, um bei kurzem Trittbrett mehr Armfreiheit zu erhalten.

Das Trittbrett und der Lenker sind an der Vorderpartie und an der Verbindungspartie um die Lenkerachse schwenkbar miteinander verbunden. Die Vorderpartie und die Verbindungspartie spannen zwei parallele Ebenen auf, auf denen die Lenkerachse normal aufsteht.

Die Verbindungspartie ist hierbei auf der dem Vorderrad zugewandten Unterseite der Vorderpartie angeordnet. Bei einer Verwendung des Tretrollers als Fortbewegungsmittel befindet sich die Frontpartie vor der Vorderpartie. Durch ein Verschwenken um 180° um die Lenkerachse kann so der Lenker unter das Trittbrett verbracht werden, um ohne Betätigung von Ver- und/oder Entriegelungen, zu sichernder Klappscharniere, lösbarer Bajonett- oder sonstige Verschlüsse eine kompakte Packgröße zu erhalten, bei der der Lenker unter minimalem, zum Verschwenken erforderlichen Abstand von der bei einer Verwendung des Tretrollers als Fortbewegungsmittel der Fahrbahn zugewandten Unterseite her parallel zum Trittbrett zu liegen kommt.

Der elektromotorische Antrieb ist in das Hinterrad und/oder das Vorderrad integriert. Ein bevorzugt wiederaufladbarer elektrischer Energiespeicher ist im oder am Trittbrett, dort bevorzugt in der Aufstandspartie und/oder im Lenker, dort bevorzugt in der Frontpartie beherbergt. Der elektromotorisierte Tretroller kann vorzugsweise am Lenker angeordnete Betätigungsmittel zur Aktivierung, Deaktivierung und/oder Regelung des elektromotorischen Antriebs aufweisen. Alternativ oder zusätzlich ist eine automatische Regelung des elektromotorischen Antriebs in Abhängigkeit von einer muskelkraftbetätigten Fortbewegung des Tretrollers denkbar, beispielsweise ähnlich einer elektromotorischen Unterstützung bei Elektrofahrrädern, wo der elektromotorische Antrieb nur bei Muskelkraftbetätigung des Pedalantriebs aktiviert wird.

Vorteile gegenüber dem Stand der Technik sind unter Anderem:
- eine geringe Packgröße und ein geringes Gewicht.
- eine schnelle und einfache Montage von der Pack- zur Einsatzgröße sowie Verpacken von der Einsatz- zur Packgröße.
- eine ständig verfügbare Mobilität.
- ein intuitives Fahren.
- eine leichte Handhabung und Umgang.
- ein geringer Verschleiß durch die verwendbaren Werkstoffe.
- eine hohe Reichweite und Belastbarkeit.
- die Möglichkeit einer Verwendung austauschbarer, extern zu ladender elektrischer Energiespeicher.

Der Tretroller kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Zusätzliche, über die vollständige Lösung der gestellten Aufgabe und/oder über die voran zu den einzelnen Merkmalen genannten Vorteile hinausgehende Vorteile gegenüber dem Stand der Technik sind in der nachfolgenden Beschreibung aufgeführt.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
Fig. 1 drei aufeinander folgende, perspektivische Momentanansichten einer Überführung eines elektromotorisieren Tretrollers aus einer Fahrstellung in Fig. 1 a) über eine Zwischenstellung in Fig. 1 b) in eine Packstellung in Fig. 1 c).
Fig. 2 eine Detailansicht eines das Vorderrad und das Hinterrad eines elektromotorisieren Tretrollers während des Nichtgebrauchs in Packstellung aufbewahrenden Radträgers in perspektivischer Ansicht.
Fig. 3 eine Detailansicht einer Radaufhängung eines mit einem elektromotorischen Antrieb ausgestatteten Vorderrads eines elektromotorisieren Tretrollers von der Seite in Fig. 3 a) und von vorn in Fig. 3 b).
Fig. 4 eine Detailansicht einer Radaufhängung eines Vorderrads eines elektromotorisieren Tretrollers in perspektivischer Ansicht von oben in Fig. 4 a) und in perspektivischer Ansicht von der Seite in Fig. 4 b).
Fig. 5 eine Detailansicht einer Frontpartie mit teleskopierbaren Handgriffen eines Lenkers eines elektromotorisieren Tretrollers mit eingezogenen Handgriffen in Fig. 5 a) und mit ausgefahrenen Handgriffen in Fig. 5 b) jeweils in einer Vorderansicht.
Fig. 6 eine die Unterbringung des elektromotorischen Antriebs und des zu dessen Stromversorgung notwendigen elektrischen Energiespeichers an einem elektromotorisieren Tretroller in einer perspektivischen Ansicht zeigende Detailansicht.

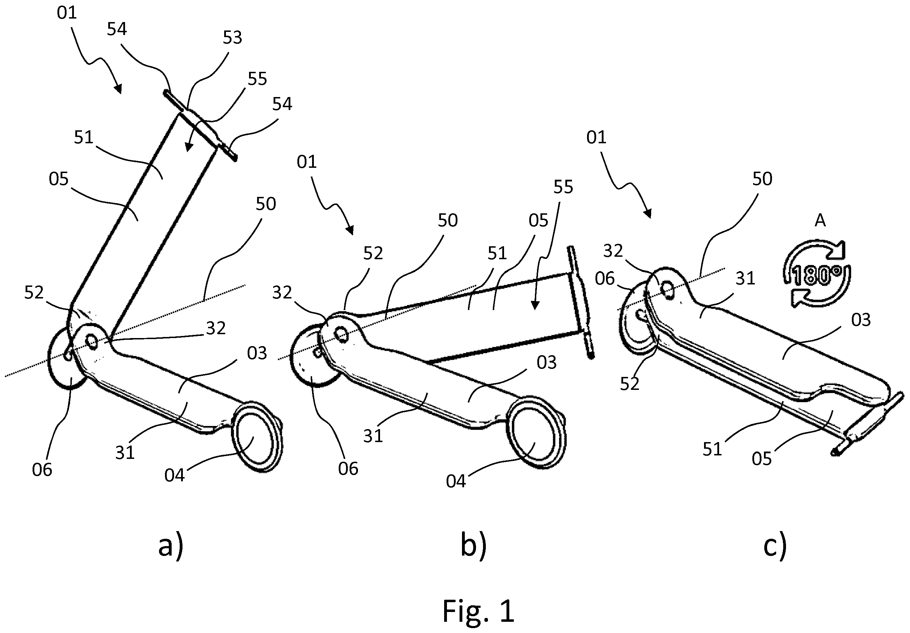

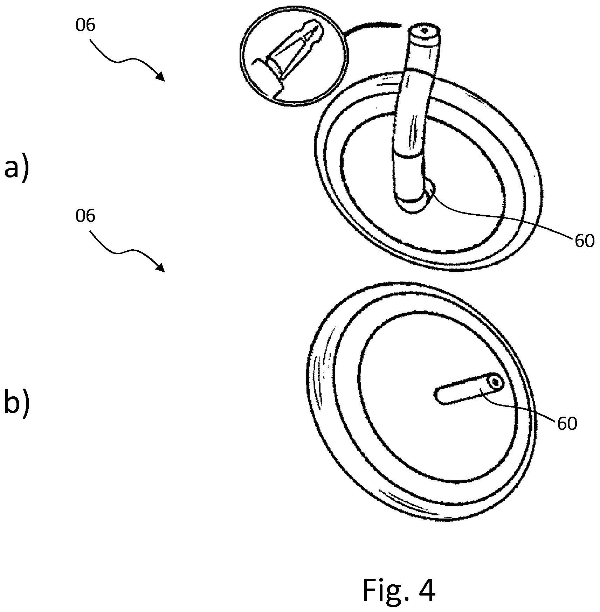

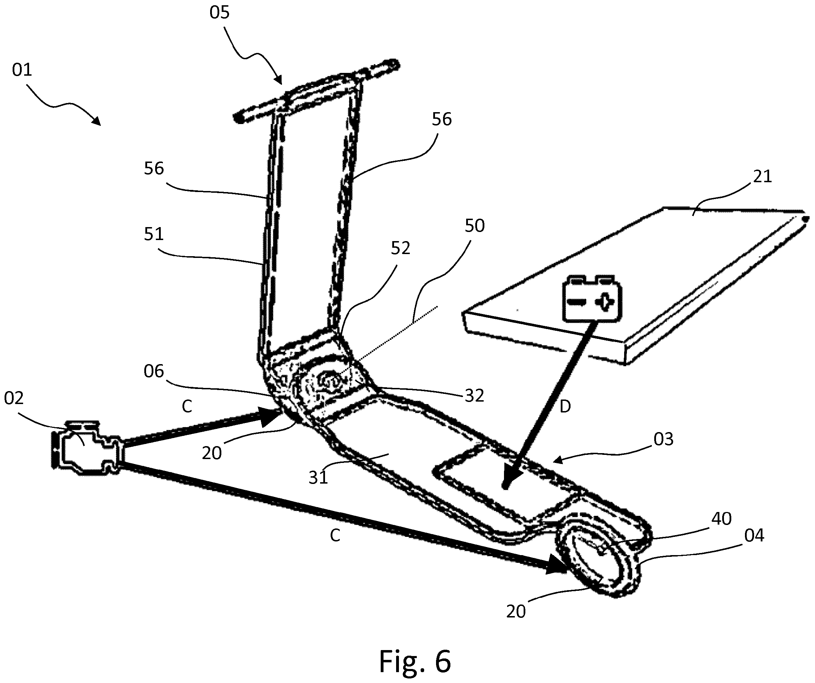

Ein in Fig. 1, Fig. 2, Fig. 3, Fig. 4, Fig. 5, Fig. 6 ganz oder in Teilen dargestellter elektromotorisierter Tretroller 01 umfasst:
- einen elektromotorischen Antrieb 02,
- ein Trittbrett 03,
- ein an dem Trittbrett 03 bevorzugt lösbar angeordnetes Hinterrad 04,
- einen Lenker 05, und
- ein unverdrehbar mit dem Lenker 05 verbundenes, gemeinsam mit diesem um eine schräg stehende, in Fig. 1 und Fig. 6 gestrichelt eingezeichnete Lenkerachse 50 hin und her schwenkbares Vorderrad 06.

Der Lenker 05 ist durch ein in Fig. 1 durch Pfeile A angedeutetes Verschwenken um 180° um die Lenkerachse 50 unter das Trittbrett 03 und wieder zurück verbringbar, wodurch ohne Betätigung von Ver- und/oder Entriegelungen, zu sichernder Klappscharniere, lösbarer Bajonett- oder sonstiger Verschlüsse eine kompakte Packgröße erhalten wird, bei der der Lenker unter minimalem, zum Verschwenken erforderlichen Abstand von der bei einer Verwendung des Tretrollers 01 als Fortbewegungsmittel der Fahrbahn zugewandten Unterseite her parallel zum Trittbrett 03 zu liegen kommt. Aus Sicherheitsgründen sollte jedoch ein Pin oder eine oder mehrere Kugel(n) einrasten, wenn die Fahrkonfiguration eingestellt ist. Dabei kommen Federdruckstücke zum Einsatz.

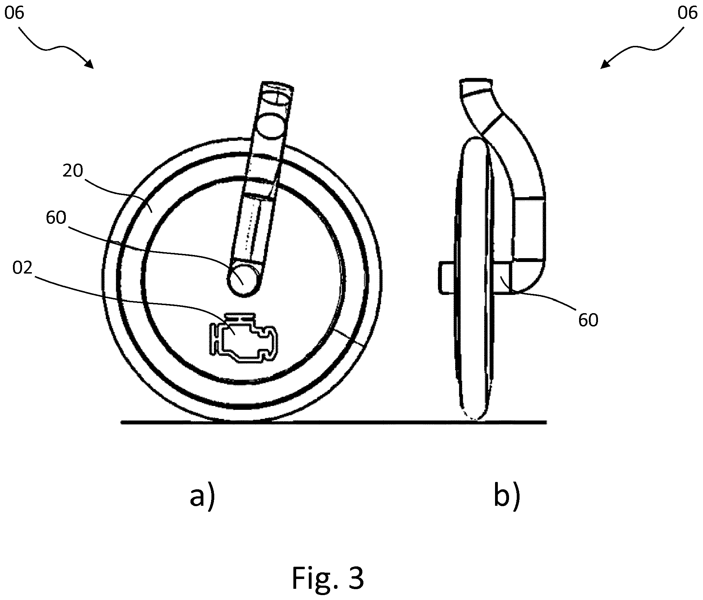

Der elektromotorische Antrieb 02 ist wie in Fig. 3 durch ein Motorsymbol und in Fig. 6 durch von einem Motorsymbol zu den Rädern weisende Pfeile C angedeutet in das Hinterrad 04 und/oder das Vorderrad 06 integriert. Der elektromotorische Antrieb 02 umfasst bevorzugt einen Elektro-Radnabenmotor 20, der direkt in ein Rad des Tretrollers 01 eingebaut ist und gleichzeitig die Radnabe trägt. Ein Teil des Motors überträgt das erzeugte Drehmoment auf das Rad, mit dem er umläuft. Der Elektro-Radnabenmotor 20 kann sowohl Innen- als auch als Außenläufer ausgebildet sein.

Ein bevorzugt wiederaufladbarer elektrischer Energiespeicher 21 ist wie in Fig. 6 durch den Pfeil D angedeutet im oder am Trittbrett 03, alternativ oder zusätzlich im oder am Lenker 05 beherbergt.

Die Lenkerachse 50 ist ausgehend vom Vorderrad 04 schräg nach hinten geneigt.

Das Trittbrett 03 weist eine bei einer Verwendung des Tretrollers 01 als Fortbewegungsmittel im Wesentlichen parallel zur Fahrbahn liegende Aufstandspartie 31 und eine gegenüber dieser aufgekimmte, sich an diese nach vorn zum lenkbaren Vorderrad 06 hin unter einem ersten Winkel anschließende Vorderpartie 32 auf.

Das Hinterrad 04 ist am der Vorderpartie 31 abgewandten Ende der Aufstandspartie 32 angeordnet.

Die Lenkerachse 50, um welche das Vorderrad 06 gemeinsam mit dem mit diesem unverdrehbar verbundenen Lenker 05 hin und her schwenkbar am Trittbrett 03 angeordnet ist, steht normal auf der gegenüber der Aufstandspartie 31 geneigten Vorderpartie 32 auf.

Der Lenker 05 weist eine Frontpartie 51 und eine sich an diese unter einem zweiten Winkel anschließende Verbindungspartie 52 auf.

Der bevorzugt wiederaufladbare elektrische Energiespeicher 21 ist vorzugsweise in der Aufstandspartie 31 des Trittbretts 03 und/oder in der Frontpartie 51 des Lenkers 05 beherbergt.

Das Trittbrett 03 und der Lenker 05 sind an der Vorderpartie 32 und an der Verbindungspartie 52 um die Lenkerachse 50 schwenkbar miteinander verbunden.

Die Vorderpartie 32 und die Verbindungspartie 52 spannen zwei parallele Ebenen auf, auf denen die Lenkerachse 50 normal aufsteht.

Die Verbindungspartie 52 ist auf der dem Vorderrad 06 zugewandten Unterseite der Vorderpartie 32 angeordnet.

In einer Fahrstellung des Tretrollers 01, in welcher der Tretroller 01 beispielsweise während einer Verwendung des Tretrollers als Fortbewegungsmittel seine Einsatzgröße einnimmt, befindet sich die Frontpartie 51 des Lenkers 05 in Fahrtrichtung vor der Vorderseite der Vorderpartie 32 und ist dabei vor dem Vorderrad 06 angeordnet.

Der die Aufkimmung der Vorderpartie 32 gegenüber der Aufstandspartie 31 des Trittbretts 03 beschreibende erste Winkel entspricht dem einen Knick- oder Übergangswinkel zwischen der Frontpartie 51 und der Verbindungspartie 52 des Lenkers 05 beschreibenden zweiten Winkel.

Der die Aufkimmung der Vorderpartie 32 gegenüber der Aufstandspartie 32 des Trittbretts 03 beschreibende erste Winkel und der einen Knick- oder Übergangswinkel zwischen der Frontpartie 51 und der Verbindungspartie 52 des Lenkers 05 beschreibende zweite Winkel betragen jeweils zwischen 30° und 60°, besonders bevorzugt 45°.

Bei dem Tretroller 01 ist durch ein Verschwenken des Lenkers 05 um 180° um die Lenkerachse 50 der Lenker 05 aus einer Fahrstellung, in der dessen Frontpartie 51 bei gerade stehendem Vorderrad 06 von der Lenkerachse 50 aus gesehen nach vorn gerichtet ist und unter einem der Summe des ersten und des zweiten Winkels entsprechenden Winkel gegenüber der Aufstandspartie 31 des Trittbretts 03 aufsteht, in eine in Fig. 1 c) dargestellte Packstellung, in der die Frontpartie 51 des Lenkers 05 parallel unter der Aufstandspartie 31 des Trittbretts liegt, und wieder zurück verbringbar. Fig. 1 a) entspricht hierbei einer Fahrstellung, bei der das Vorderrad 06 eingeschlagen und der Lenker 05 aus einer Geradeausstellung leicht um die Lenkerachse 50 verdreht und dadurch gegenüber der Aufstandspartie 31 des Trittbretts geneigt ist.

Fig. 1 b) zeigt eine Zwischenstellung, in der kein Fahrbetrieb mehr möglich ist, welche der Tretroller 01 während der Überführung aus der Fahrstellung in die Packstellung und umgekehrt kurzzeitig einnimmt.

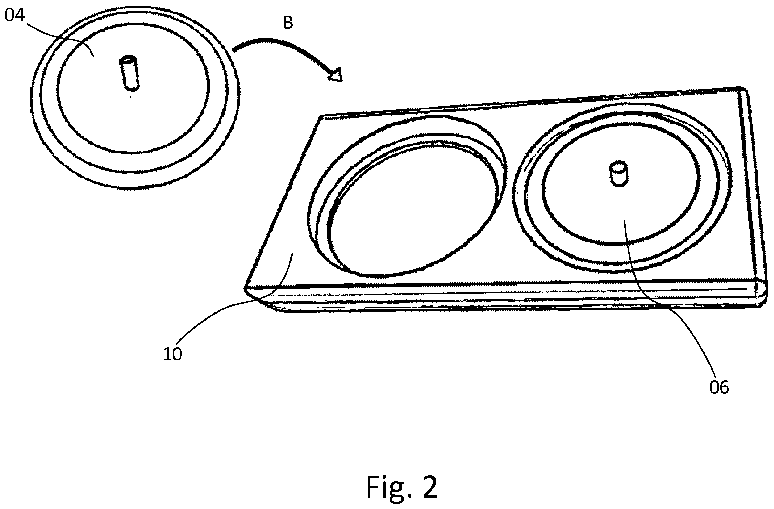

Beispielsweise zum Transport des Tretrollers 01 in der in Fig. 1 c) dargestellten Packstellung kann zumindest das Hinterrad 06 abgenommen und in einem separaten, beispielsweise mit einer passenden Ausnehmung versehenen Radträger 10 untergebracht werden, wie in Fig. 2 durch einen Pfeil B angedeutet. Gegebenenfalls kann zum Erhalt einer noch kompakteren Packgröße auch das Vorderrad 04 abgenommen und ebenfalls in einem Radträger 10 untergebracht werden. Der Radträger 10 kann demnach als ein sowohl das Hinterrad 06, als auch das Vorderrad 04 beherbergender Doppelradträger mit passenden Ausnehmungen ausgeführt sein, wie in Fig. 2 dargestellt. Der Radträger 10 kann getrennt vom Tretroller 01 mitgeführt werden. Grundsätzlich ist denkbar, dass der Radträger 10 im Trittbrett 03 oder im Lenker 05 untergebracht werden oder integriert sein kann, beispielsweise als ein Einschub.

Die Unterbringung der Räder in einer Box (10) zwischen Lenker (05) und Trittbrett (03) bewirkt eine Arretierung beider übereinanderliegender Rollersegmente 05 und 03. Bei einem Durchmesser von 12" müssen die Räder separat verstaut werden und die Arretierung muss anderweitig gelöst werden.. Als Einschub übernimmt der Radträger (10) in der Packstellung eine Verriegelung des Trittbretts (03) mit dem Lenker (05).

Der Tretroller 01 kann am Lenker angeordnete Betätigungsmittel zur Aktivierung, Deaktivierung und/oder Regelung des elektromotorischen Antriebs 02 aufweisen.

Eine Regelung des elektromotorischen Antriebs 02 kann in Abhängigkeit von einer muskelkraftbetätigten Fortbewegung des Tretrollers 01 erfolgen, beispielsweise ähnlich einer elektromotorischen Unterstützung bei Elektrofahrrädern, wo der elektromotorische Antrieb nur bei Muskelkraftbetätigung des Pedalantriebs aktiviert wird.

Die Regelung kann nur bei muskelkraftbetätigter Fortbewegung des Tretrollers 01 einen Betrieb des elektromotorischen Antriebs vorsehen. Eine Erkennung muskelkraftbetätigter Fortbewegung des Tretrollers 01 kann beispielsweise durch Erfassung von Abstoßbewegungen, sei es durch Beschleunigungs- und/oder Drehzahländerungen längs der Fahrtrichtung und/oder durch Belastungsänderungen vertikal zur Fahrtrichtung erkannt werden.

Vorteilhaft ist eine Rekuperation der Bremsenergie vorgesehen. Bei einer Verzögerung, sei es durch Betätigung einer Bremse oder durch Beenden der muskelkraftbetätigten Fortbewegung oder durch Rückstellen, beispielsweise bei Loslassen eines Betätigungsmittels, kann die kinetische Energie des Tretrollers 01 in elektrische Energie umgewandelt und im elektrischen Energiespeicher 21 gespeichert werden, die dann wieder einem späteren Betrieb des elektromotorischen Antriebs 02 zur Verfügung steht.

Die Frontpartie 51 umfasst bevorzugt eine Griffpartie 53 mit mindestens einem Handgriff 54. Der Handgriff 54 kann durch eine eine Grifföffnung bildende Ausnehmung in einer beispielsweise als ein Frontschild 55 ausgebildeten oder ein Frontschild 55 umfassenden Frontpartie 51 hergestellt sein.

Vorzugsweise sind zwei seitlich der Frontpartie 51 abstehende Handgriffe 54 vorgesehen.

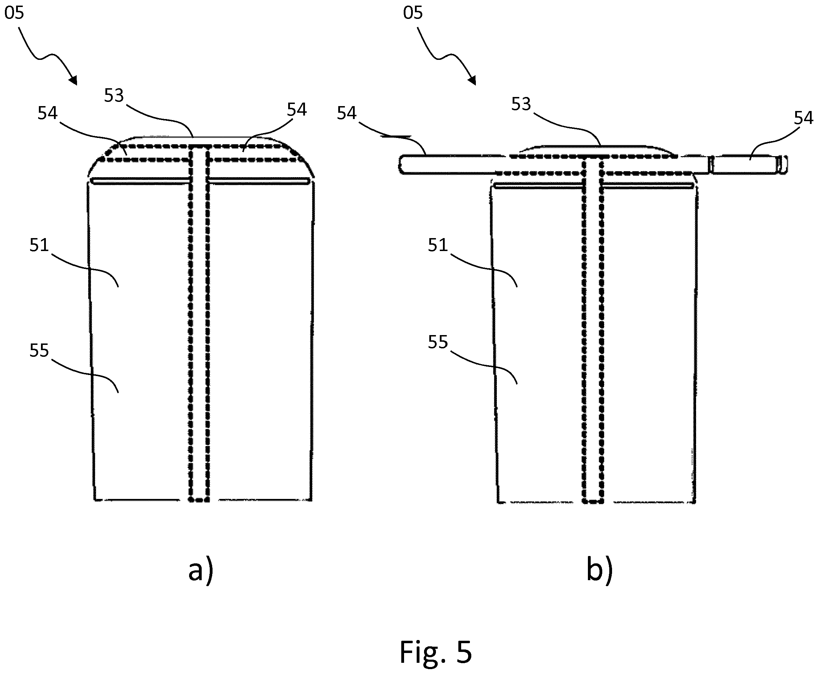

Um eine kompakte Packgröße zu erhalten sind die Handgriffe 54 seitlich teleskopierbar, wie in Fig. 5 dargestellt. Dabei zeigt Fig. 5 a) einen in das Frontschild einbeziehungsweise zurückgezogenen Zustand der Handgriffe 54. Fig. 5 b) zeigt den Fahrzustand, in dem die teleskopierbaren Handgriffe 54 seitlich der Frontpartie 51 abstehen.

Die Frontpartie 51 kann die seitlich teleskopierbaren Handgriffe 54 umfassen.

Alternativ oder zusätzlich kann die Frontpartie 51 eine gegenüber der Verbindungspartie 52 abstandsveränderlich teleskopierbare Griffpartie 53 mit mindestens einem Handgriff 54 umfassen.

Die Frontpartie 51 kann wie in Fig. 1 und Fig. 5 dargestellt ein Frontschild 55 umfassen. Alternativ kann die Frontpartie 51 offen gestaltet sein, beispielsweise mit einem zentralen oder einem beidseitigen in der Höhe einstellbaren Teleskopgestänge 56 (Fig. 6).

Die Verbindungspartie 52 kann als ein Spritzschutz ausgebildet sein.

Der elektromotorisierte Tretroller 01 kann in jeder beliebigen Größe ausgeführt sein, beispielsweise als ein elektromotorisierter Mini-Tretroller mit einem Raddurchmeser von höchstens etwa 15cm beziehungsweise 6", oder als ein elektromotorisierter Full-Size-Tretroller mit einem Raddurchmesser von beispielsweise 30cm beziehungsweise 12".

Das Hinterrad 04 des elektromotorisierten Tretrollers 01 kann mit einer Einfach- oder Doppelbereifung ausgestattet sein.

Wichtig ist hervorzuheben, dass der elektromotorisierte Tretroller 01 durch das Verschwenken des Lenkers 05 um die Lenkerachse 50 klapp- beziehungsweise faltbar ist. Als Alternative dazu, dass das Hinterrad 04 in der Packstellung abgenommen ist, kann es um eine entlang der Aufstandspartie 31 verlaufende Horizontalachse verschwenkt werden, wodurch die Frontpartie 51 genau so dicht an der Unterseite der Aufstandspartie 31 beigedreht werden kann, wie wenn das Hinterrad 04 abgenommen wäre.

Es ist ersichtlich, dass die Erfindung verwirklicht sein kann durch einen Tretroller 01 mit elektromotorischem Antrieb 02, bei dem der beispielsweise ein Frontschild 55 umfassender Lenker 05 um eine in einem Drehpunkt durch das Trittbrett 03 und den Lenker 05 hindurchgehende, schräg stehende Lenkerachse 50 parallel unter das Trittbrett verschwenkbar und dort beispielsweise verriegelbar ist. Die Räder 04, 06 einschließlich der Zapfen 40, 60 auf denen sie gelagert sind verfügen über ein speziell ausgeführtes Stecksystem. In Packstellung befinden sich die Räder 04, 06 in einem im Trittbrett 03 untergebrachten Radträger 10. Die durch Lenkerstummel gebildeten Handgriffe 54 sind teleskopierbar. Der Tretroller 01 ermöglicht eine rein elektrische und eine rein muskelkraftbetätigte Fortbewegung, sowie einen Mischbetrieb mit muskelkraftbetätigter Trittunterstützung. Der Tretroller 01 verfügt über eine elektrische Bremse, welche eine Rekuperation ermöglicht.

Vorteile ergeben sich unter Anderem durch eine reduzierte Anzahl der erforderlichen Schritte zum Falten oder Aufklappen des Tretrollers 01, dessen Nutzung als Koffer-Trolli, eine kleine Packgröße mit rechteckigem Grundriss zur einfachen Verstaubarkeit beispielsweise im Kofferraum eines Personenkraftwagens.

Der Tretroller 01 verfügt über einen sich intuitiv erklärenden Aufklapp- und Faltmechanismus, der trotz nur weniger Schritte zu einer sehr kompakten Packgröße führt und dabei in Fahrstellung beziehungsweise Einsatzgröße dennoch steif und robust ist. Der Tretroller 01 bietet die Möglichkeit zum Transport einer Person, aber auch von Einkäufen und Koffern. In Packstellung ermöglich das nicht ausgebaute Vorderrad 06 die Nutzung als Koffer-Trolli.

Wichtig ist hervorzuheben, dass der Aufbau über die Lenkerachse 50 nur wenige Sekunden dauert. In einem in Fig. 1 in seinem Ablauf von Fig. 1 c) über Fig. 1 b) zu Fig. 1a) dargestellten ersten Schritt 1 erfolgt eine Drehung des Trittbretts 03 gegenüber dem Lenker 05 in die Fahrstellung.

In einem zweiten Schritt kann eine Verriegelung auf der Lenkerachse 50 von Standboard und Frontschild mit einer Gewindemutter erfolgen.

In einem dritten Schritt erfolgt die Entnahme der Räder 04, 06 aus dem Radträger 10 und das Aufstecken der Räder 04, 06 auf die sie tragenden Zapfen 40, 60.

In einem vierten Schritt erfolgt das Ausziehen und Arretieren der Handgriffe 54 aus der Griffpartie 53 des Lenkers 05, wie in Fig. 5 dargestellt.

Ebenfalls wichtig ist hervorzuheben, dass die verwendbaren Materialien den Tretroller 01 leicht, widerstandsfähig und robust machen. So findet Aluminium Anwendung, aber auch ein auf Karbonfaser basierender Verbundstoff kann eingesetzt werden. Im Volumen nimmt der Tretroller 01 15l bei einen Gewicht von 8,3kg ein.

Der Tretroller 01 verfügt vorzugsweise über einen Hinterradantrieb, eine Trittunterstützung und eine elektrische Bremse. Wahlweise ist auch ein elektrischer Antrieb von Vorderrad 06 und Hinterrad 04 denkbar. Der Antrieb ist auch herkömmlich mit Abstoßen auf der Fahrbahn möglich. Elektrisch betrieben wird die Geschwindigkeit, ähnlich wie bei klassischen Motorrollern, über ein als ein Gashebel ausgeführtes Betätigungsmittel reguliert. Über eine den elektromotorischen Antrieb 02 als Generator nutzende elektromotorische Bremse wird Energie dem elektrischen Energiespeicher 21 zurückgeführt, dadurch ist der Tretroller 01 sehr sparsam, leistungsstark und effizient. Mit seinem elektrischen Antrieb kann der Tretroller 01 auf eine Höchstgeschwindigkeit von 25km/h ausgelegt sein.

Der elektromotorische Antrieb 02 des der Tretrollers 01 befindet sich in den Rädern 04, 06. Beispielsweise ist dafür ein Brushless DC Motor vorgesehen, der über einen als elektrischer Energiespeicher 21 dienenden Akku, der unter der Aufstandspartie 31 des Trittbretts 03 installiert ist, mit Energie versorgt wird. Der Akku lässt sich ausbauen. Es kann ein handelsübliches Powerpack verwendet werden, das mit einer Ladung zwischen 60-150km Reichweite erreicht.

Die Anordnung der Handgriffe 54 in der Fahrstellung ist auf Personen mit einer Körpergröße von bevorzugt zwischen 1,50m und 1,90m ausgelegt.

Durch einen Teleskopmechanismus lassen sich die beiden Handgriffe 54 links und rechts aus der Griffpartie 53 herausziehen und wieder zurückschieben. Hierzu kann jeweils ein Knopf an den Seiten der Frontpartie 51, beispielsweise der Griffpartie 53 betätigt werden, um die Handgriffe 54 ausziehen und wieder zurückschieben zu können. Beispielsweise druch eine kräftige Drehung können die Handgriffe 54 in ausgezogener Stellung mechanisch arretiert werden. Durch die Nutzung von Teleskopstangen stecken die Handgriffe 54 ineinander und sind so formschlüssig im Tretroller 01 verstaut. Das hat den Vorteil, dass keine störenden Teile das Verpacken beinträchtigen und den Nutzer eventuell verletzten.

Die Räder 04, 06 können jeweils eine Welle oder Zapfen 40, 60 eine Achse aus Stahl aufweisen, die am Tretroller 01 in eine Aufnahme gesteckt werden. Eine Alternative ergibt sich durch mit dem Tretroller 01 fest verbundene Zapfen 40, 60, auf welche die Räder aufgesteckt werden. Sowohl der Vorgang des Einsteckens der Wellen in die Aufnahmen, als auch des Aufsteckens der Räder 04, 06 auf die Zapfen 40, 60 erzeugt ein akustisches Kontrollsignal, wenn das jeweilige Rad 04, 06 fest montiert ist. Entsprechend einfach lassen sich die Räder 04, 06 auch wieder demontieren. Hierfür wird ein Druckknopf an der Frontpartie und an der Welle gedrückt, dabei wird die Welle freigegeben.

Der Radträger 10 für das Vorderrad 06 und das Hinterrad 04 kann sich zwischen der Aufstandspartie 31 des Trittbretts 03 und dem eingedrehten Frontpartie 51 des Lenkers 05 befinden. Hierdurch kann der Radträger 10 ein unbeabsichtigtes Aufdrehen des Tretrollers 01 verhindern. Vorzugsweise lässt sich die Drehbewegung erst nach Entnahme des Radträgers 10 und der Montage der beiden Räder 04, 06 durchführen.

Zusammengefaltet ist das Konzept nicht größer als ein Trolli und kann im Personenkraftwagens beispielsweise auf oder als Hutablage unterhalb der Heckscheibe verstaut werden. Seine geringe Größe erlaubt es jedoch auch mehrere Roller im Kofferraum platzsparend unterzubringen.

Der Tretroller 01 kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der vorangehenden Beschreibung und/oder den Ansprüchen erwähnte Merkmale aufweisen.

Die Erfindung ist insbesondere im Bereich der Herstellung von Fortbewegungsmitteln für die individuelle Mobilität gewerblich anwendbar.

### Bezugszeichenliste

- 01: Tretroller
- 02: Elektromotorischer Antrieb
- 03: Trittbrett
- 04: Hinterrad
- 05: Lenker
- 06: Vorderrad

- 10: Radträger

- 20: Elektro-Radnabenmotor
- 21: elektrischer Energiespeicher

- 31: Aufstandspartie
- 32: Vorderpartie

- 40: Zapfen

- 50: Lenkerachse
- 51: Frontpartie
- 52: Verbindungspartie
- 53: Griffpartie
- 54: Handgriff
- 55: Frontschild
- 56: Teleskopgestänge

- 60: Zapfen

- A: Pfeil
- B: Pfeil
- C: Pfeil
- D: Pfeil

## Patentansprüche

1. Tretroller (01) mit elektromotorischem Antrieb (02), einem Trittbrett (03), einem an dem Trittbrett (03) angeordneten Hinterrad (04), einem Lenker (05) und einem unverdrehbar mit dem Lenker (05) verbundenen, gemeinsam mit diesem um eine schräg stehende Lenkerachse (50) hin und her schwenkbaren Vorderrad (06), wobei:
- der elektromotorische Antrieb (02) in das Hinterrad (04) und/oder das Vorderrad (06) integriert ist,
- ein elektrischer Energiespeicher (21) im oder am Trittbrett (03) und/oder im oder am Lenker (05) beherbergt ist,
- die Lenkerachse (50) ausgehend vom Vorderrad (06) schräg nach hinten geneigt ist,
- das Trittbrett (03) eine Aufstandspartie (31) und eine sich an diese unter einem ersten Winkel anschließende Vorderpartie (32) aufweist,
- der Lenker (05) eine Frontpartie (51) und eine sich an diese unter einem zweiten Winkel anschließende Verbindungspartie (52) aufweist,
- das Trittbrett (03) und der Lenker (05) an der Vorderpartie (32) und an der Verbindungspartie (52) um die Lenkerachse (50) schwenkbar miteinander verbunden sind,
- die Vorderpartie (32) und die Verbindungspartie (52) zwei parallele Ebenen aufspannen, auf denen die Lenkerachse (50) normal aufsteht,
- in einer Fahrstellung die Frontpartie (51) vor dem Vorderrad (06) angeordnet ist,
- die Verbindungspartie (52) auf der dem Vorderrad (06) zugewandten Unterseite der Vorderpartie (32) angeordnet ist, **dadurch gekennzeichnet dass**,
- der erste Winkel dem zweiten Winkel entspricht,
so dass durch ein Verschwenken um 180° um die Lenkerachse (50) der Lenker (05) aus einer Fahrstellung, in der dessen Frontpartie (51) gegenüber der Aufstandspartie (31) des Trittbretts (03) aufsteht, in eine Packstellung, in der dessen Frontpartie (51) parallel unter der Aufstandspartie (31) des Trittbretts (03) liegt, und wieder zurück verbringbar ist.

2. Tretroller nach Anspruch 1, wobei der erste Winkel und der zweite Winkel jeweils 30° bis 60°, bevorzugt jeweils 45° betragen.

3. Tretroller nach Anspruch 1 oder 2, wobei der elektrische Energiespeicher (21) in der Aufstandspartie (31) und/oder in der Frontpartie (51) beherbergt ist.

4. Tretroller nach Anspruch 1, 2 oder 3, wobei er am Lenker (05) angeordnete Betätigungsmittel zur Aktivierung, Deaktivierung und/oder Regelung des elektromotorischen Antriebs (02) aufweist.

5. Tretroller nach einem der voranstehenden Ansprüche, wobei eine Regelung des elektromotorischen Antriebs (02) in Abhängigkeit von einer muskelkraftbetätigten Fortbewegung des Tretrollers (01) vorgesehen ist, welche nur bei muskelkraftbetätigter Fortbewegung des Tretrollers (01) einen Betrieb des elektromotorischen Antriebs (02) vorsieht.

6. Tretroller nach einem der voranstehenden Ansprüche, wobei eine Rekuperation der Bremsenergie vorgesehen ist.

7. Tretroller nach einem der voranstehenden Ansprüche, wobei die Frontpartie (51) ein Frontschild (55) umfasst.

8. Tretroller nach einem der voranstehenden Ansprüche, wobei die Frontpartie (51) eine gegenüber der Verbindungspartie (52) abstandsveränderlich teleskopierbare Griffpartie (53) mit mindestens einem Handgriff (54) umfasst.

9. Tretroller nach einem der voranstehenden Ansprüche, die Frontpartie (51) seitlich teleskopierbare Handgriffe (54) umfasst.

10. Tretroller nach einem der voranstehenden Ansprüche, wobei die Verbindungspartie (52) als ein Spritzschutz ausgebildet ist.

## Claims

1. Kick-scooter (01) having an electric-motorized drive (02), a footboard (03), a rear wheel (04) that is arranged on the footboard (03), a steering assembly (05) and a front wheel (06) that is non-rotatably connected to the steering assembly (05) and can pivot to and fro together with this steering assembly about an inclined steering assembly axis (50), wherein:
- the electric-motorized drive (02) is integrated in the rear wheel (04) and/or the front wheel (06),
- an electrical energy storage device (21) is accommodated in or on the footboard (03) and/or in or on the steering assembly (05),
- the steering assembly axis (50) is tilted in an inclined manner towards the rear starting from the front wheel (06),
- the footboard (03) comprises a standing portion (31) and a forward portion (32) that adjoins said standing portion at a first angle,
- the steering assembly (05) comprises a front portion (51) and a connecting portion (52) that adjoins said front portion at a second angle,
- the footboard (03) and the steering assembly (05) are connected to one another at the forward portion (32) and at the connection portion (52) in such a manner as to be able to pivot about the steering assembly axis (50),
- the forward portion (32) and the connecting portion (52) extend over two parallel planes and the steering assembly axis (50) is orientated normal to said planes,
- in a drive position, the front portion (51) is arranged ahead of the front wheel (06),
- the connecting portion (52) is arranged on the lower face of the forward portion (32) facing the front wheel (06), **characterized in that**
- the first angle corresponds to the second angle,
so that by virtue of a pivot movement about 180° about the steering assembly axis (50) the steering assembly (05) can be moved out of a drive position, in which the front portion (51) of said steering assembly is standing upright with respect to the standing portion (31) of the footboard (03), into a packed position, in which the front portion (51) of said steering assembly lies in a parallel manner underneath the standing portion (31) of the footboard (03), and back into the said drive position.

2. Kick-scooter according to Claim 1, wherein the first angle and the second angle are in each case 30° to 60°, preferably 45°.

3. Kick-scooter according to Claim 1 or 2, wherein the electrical energy storage device (21) is accommodated in the standing portion (31) and/or in the front portion (51).

4. Kick-scooter according to Claim 1, 2 or 3, wherein said kick-scooter comprises actuating means that are arranged on the steering assembly (05) so as to activate, deactivate and/or control the electric-motorized drive (02).

5. Kick-scooter according to any one of the preceding claims, wherein the electric-motorized drive (02) is controlled in dependence upon a muscle power-actuated forwards movement of the kick-scooter (01), said control only providing an operation of the electric-motorized drive (02) in the case of a muscle power-actuated forwards movement of the kick-scooter (01).

6. Kick-scooter according to any one of the preceding claims, wherein it is possible to recover the braking energy.

7. Kick-scooter according to any one of the preceding claims, wherein the front portion (51) comprises a front plate (55).

8. Kick-scooter according to any one of the preceding claims, wherein the front portion (51) comprises a handle portion (53) having at least one hand grip (54) and the spacing of said handle portion with respect to the connecting portion (52) can be changed in a telescopic manner.

9. Kick-scooter according to any one of the preceding claims, the front portion (51) comprises laterally telescopic hand grips (54).

10. Kick-scooter according to any one of the preceding claims, wherein the connecting portion (52) is embodied as a splash guard.

## Revendications

1. Trottinette (01) avec un entraînement par moteur électrique (02), un pose-pieds (03), une roue arrière (04) disposée sur le pose-pieds (03), un guidon (05) et une roue avant (06) assemblée sans rotation au guidon (05) et pouvant pivoter en va-et-vient en même temps que celui-ci autour d'un axe de guidon (50) placé en oblique, dans laquelle:
- l'entraînement par moteur électrique (02) est intégré dans la roue arrière (04) et/ou dans la roue avant (06),
- un accumulateur d'énergie électrique (21) est hébergé dans ou sur le pose-pieds (03) et/ou dans ou sur le guidon (05),
- l'axe de guidon (50) est incliné en oblique vers l'arrière à partir de la roue avant (06),
- le pose-pieds (03) présente une partie de placement (31) et une partie avant (32) se raccordant à celle-ci sous un premier angle,
- le guidon (05) présente une partie frontale (51) et une partie de liaison (52) se raccordant à celle-ci sous un deuxième angle,
- le pose-pieds (03) et le guidon (05) sont reliés l'un à l'autre à la partie avant (32) et à la partie de liaison (52) de façon pivotante autour de l'axe de guidon (50),
- la partie avant (32) et la partie de liaison (52) définissent deux plans parallèles, auxquels l'axe de guidon (50) est perpendiculaire,
- dans une position de roulage, la partie frontale (51) est disposée devant la roue avant (06),
- la partie de liaison (52) est disposée sur le côté inférieur de la partie avant (32) tournée vers la roue avant (06),
**caractérisée en ce que**
- le premier angle correspond au deuxième angle,
- de telle manière que par un pivotement de 180° autour de l'axe de guidon (50) le guidon (05) puisse être amené d'une position de roulage, dans laquelle sa partie frontale (51) est dressée par rapport à la partie de placement (31) du pose-pieds (03), à une position de rangement, dans laquelle sa partie frontale (51) est située parallèlement en dessous de la partie de placement (31) du pose-pieds (03), et inversement.

2. Trottinette selon la revendication 1, dans laquelle le premier angle et le deuxième angle valent chacun 30° à 60°, de préférence chacun 45°.

3. Trottinette selon la revendication 1 ou 2, dans laquelle l'accumulateur d'énergie électrique (21) est hébergé dans la partie de placement (31) et/ou dans la partie frontale (51).

4. Trottinette selon la revendication 1, 2 ou 3, dans laquelle elle présente des moyens d'actionnement disposés sur le guidon (05), pour l'activation, la désactivation et/ou la régulation de l'entraînement par moteur électrique (02).

5. Trottinette selon l'une quelconque des revendications précédentes, dans laquelle il est prévu une régulation de l'entraînement par moteur électrique (02) en fonction d'une propulsion par la force musculaire de la trottinette (01), qui ne prévoit un fonctionnement de l'entraînement par moteur électrique (02) qu'en cas de propulsion par la force musculaire de la trottinette (01).

6. Trottinette selon l'une quelconque des revendications précédentes, dans laquelle il est prévu une récupération de l'énergie de freinage.

7. Trottinette selon l'une quelconque des revendications précédentes, dans laquelle la partie frontale (51) comprend un écran frontal (55).

8. Trottinette selon l'une quelconque des revendications précédentes, dans laquelle la partie frontale (51) comprend une partie de saisie (53) télescopique à distance variable de la partie de liaison (52), avec au moins une poignée (54).

9. Trottinette selon l'une quelconque des revendications précédentes, dans laquelle la partie frontale (51) comprend des poignées latéralement télescopiques (54).

10. Trottinette selon l'une quelconque des revendications précédentes, dans laquelle la partie de liaison (52) est réalisée sous la forme d'une protection contre les éclaboussures.
